# EUROPÄISCHE PATENTANMELDUNG

(11) **EP 3 838 991 A1**
(43) Veröffentlichungstag der Anmeldung: **23.06.2021**
(21) Anmeldenummer: 19218626.0
(22) Anmeldetag: 20.12.2019
(51) Int. Cl.: C09D 5/00, C09D 5/28, B32B 27/00, D21H 19/44, B32B 27/20, C09D 5/20

(54) **FLÄCHIGER BESCHICHTUNGSSTOFF, VERFAHREN ZUR BESCHICHTUNG EINER DECKE, EINES BODENS ODER EINER WAND UND VERWENDUNG DES FLÄCHIGEN BESCHICHTUNGSSTOFFS**

(71) Anmelder: DAW SE, 64372 Ober-Ramstadt (DE)
(72) Erfinder: WESTMEIER, Johannes, 64572 Büttelborn (DE); HÜBNER, Matthias, 04416 Markkleeberg (DE)
(74) Vertreter: Metten, Karl-Heinz

(57) **Zusammenfassung**

Die Erfindung betrifft einen flächigen Beschichtungsstoff mit einer vorderseitigen Fläche und einer rückseitigen Fläche sowie einem Kantenverlauf, umfassend
- eine Schicht, gebildet aus einem thermoplastischen Polymercompound, enthaltend ein erstes thermoplastisches Polymer mit einer Glasübergangstemperatur T_{g} ≤ 10 °C und einer überwiegend amorphen Morphologie sowie Füllstoffe oder Pigmente, wobei die Schicht eine Pigment/Volumen-Konzentration ≤ 95 % besitzt, oder
- mindestens zwei Schichten, wobei die Schicht, die die rückseitige Fläche enthält, gebildet ist aus einem thermoplastischen Polymercompound, enthaltend das erste thermoplastische Polymer sowie Füllstoffe oder Pigmente. Ferner betrifft die Erfindung ein Verfahren zur Beschichtung einer Decke, eines Bodens oder einer Wand, umfassend die Zurverfügungstellung des flächigen Beschichtungsstoffs und Anbringen des flächigen Beschichtungsstoffs mit seiner Rückseite an eine Decke, auf einen Boden oder an eine Wand. Schließlich betrifft die Erfindung die Verwendung des flächigen Beschichtungsstoffs für die Dekoration von Wänden, Decken oder Bodenbelägen.

## Beschreibung

Die vorliegende Erfindung betrifft einen flächigen Beschichtungsstoff sowie ein Verfahren zur Beschichtung einer Decke, eines Bodens oder einer Wand. Außerdem betrifft die Erfindung die Verwendung des flächigen Beschichtungsstoffs.

Beschichtungsstoffe für zum Beispiel Wände sind dem Fachmann seit langem bekannt, beispielsweise in Form von Farbanstrichen. Häufig haben sie eine rein dekorative Funktion, können jedoch auch als Funktionsbeschichtung eingesetzt werden, zum Beispiel als Mittel zum Schutz gegen Schimmel- oder Pilzbefall. Unter den Farben können zum Beispiel Dispersionsfarben oder Alkydharzlacke eingesetzt werden. Grundsätzlich können für Farbaufträge wässrige oder lösemittelhaltige Systeme zum Einsatz kommen. Daneben sind auch Reaktivbeschichtungen bekannt. Exemplarisch sei auf Pulverlacke sowie Epoxy- oder Isocyanatbasierte Beschichtungsstoffe verwiesen. Hierbei werden die den Beschichtungsstoff bildenden Reaktivkomponenten vor oder während des Beschichtungsprozesses miteinander vermischt und thermisch und/oder katalytisch zur Reaktion gebracht. Daneben existieren hydrolytisch aushärtende Systeme, bei denen mindestens eine Komponente mit Wasser zur Reaktion gebracht wird.

Die genannten herkömmlichen Beschichtungsstoffe können vielfach nicht ohne besonderes Fachkönnen und Fachwissen zuverlässig, zügig und sauber unter Ausbildung einer hochwertig anmutenden Beschichtung aufgebracht werden. Beispielsweise können bei unsachgemäßem Arbeiten Farbspritzer Gegenstände verunreinigen. Besondere Probleme stellen sich mit diesen Beschichtungsstoffen insbesondere auch dann ein, wenn keine einheitliche farbige Beschichtungsfläche, sondern ein Farbmuster verlangt wird. Die Übergänge der einzelnen Farben gelingen dabei zuweilen nur unsauber und verursachen selbst bei ansonsten fachgerechter Verarbeitung unter Verwendung hochwertiger Materialien einen mitunter minderwertigen Gesamteindruck.

Es wäre wünschenswert, auf Beschichtungsmaterialien zurückgreift zu können, die nicht mehr mit den geschilderten Problemen des Stands der Technik behaftet sind. Daher lag der vorliegenden Erfindung die Aufgabe zugrunde, eine Beschichtung von Wandflächen zur Verfügung zu stellen, die, insbesondere auch vom Laien, zügig zuverlässig und sauber angebracht werden kann, und zwar insbesondere auch bei komplexen Gestaltungs- bzw. Farbmustern.

Demgemäß wurde ein flächiger Beschichtungsstoff gefunden mit einer vorderseitigen Fläche, welche insbesondere die Sichtseite bildet, und einer gegenüberliegenden rückseitigen Fläche sowie einem Kantenverlauf, umfassend oder bestehend aus einer Schicht, enthaltend oder gebildet ist aus einem thermoplastischen Polymercompound, enthaltend mindestens ein erstes thermoplastisches Polymer sowie Füllstoffe und/oder Pigmente und gegebenenfalls Additive, wobei das mindestens eine erste thermoplastische Polymer eine Glasübergangstemperatur T_{g} von ≤ 10 °C, bestimmt gemäß ISO 11357-2:1999-03 (Kunststoffe-Dynamische Differenzkalorimetrie (DDK) - Teil 2: Bestimmung der Glasübergangstemperatur), aufweist, wobei das erste thermoplastische Polymer eine überwiegend amorphe Morphologie aufweist und wobei die Schicht vorzugsweise eine Pigment/Volumen-Konzentration ≤ 95 % besitzt. Die vorangehend geschilderte Ausführungsform eines erfindungsgemäßen flächigen Beschichtungsstoffs wird auch erste Ausführungsvariante genannt.

Ferner wurde ein flächiger Beschichtungsstoff gefunden mit einer vorderseitigen Fläche, welche insbesondere die Sichtseite bildet, und einer gegenüberliegenden rückseitigen Fläche sowie einem Kantenverlauf, umfassend oder bestehend aus mindestens zwei Schichten, wobei die Schicht enthaltend die rückseitige Fläche enthält oder gebildet ist aus einem thermoplastischen Polymercompound, enthaltend mindestens ein erstes thermoplastisches Polymer sowie Füllstoffe und/oder Pigmente und gegebenenfalls Additive, wobei das mindestens eine erste thermoplastische Polymer eine Glasübergangstemperatur T_{g} von ≤ 10 °C, bestimmt gemäß ISO 11357-2:1999-03 (Kunststoffe - Dynamische Differenzkalorimetrie (DDK) - Teil 2: Bestimmung der Glasübergangstemperatur), aufweist und wobei das erste thermoplastische Polymer eine überwiegend amorphe Morphologie aufweist. Die vorangehend geschilderte Ausführungsform eines erfindungsgemäßen flächigen Beschichtungsstoffs wird auch zweite Ausführungsvariante genannt. Die mindestens zwei Schichten der zweiten Ausführungsvariante der erfindungsgemäßen Beschichtungsstoffe werden in einer zweckmäßigen Ausführungsform derart ausgewählt, dass sie sich in ihrer chemischen Zusammensetzung und/oder ihren physikalischen Eigenschaften unterscheiden.

Dabei kann in einer besonders zweckmäßigen Ausführungsform vorgesehen sein, dass das erste thermoplastische Polymer mit überwiegend amorpher Morphologie Anteile mit teilkristalliner Morphologie aufweist, die nicht oberhalb von 40 Gew.-%, bevorzugt nicht oberhalb von 35 Gew.-%, bezogen auf das Gesamtgewicht des ersten thermoplastischen Polymers, liegen. Die Anteile mit teilkristalliner Morphologie verfügen dabei bevorzugt über einen Schmelzpunkt Tm, ermittelt gemäß DIN EN ISO 11357-3:2018-07 (Kunststoffe - Dynamische Differenz-Thermoanalyse (DSC) - Teil 3: Bestimmung der Schmelz- und Kristallisationstemperatur und der Schmelz- und Kristallisationsenthalpie (ISO 11357-3:2018), größer 25 °C, bevorzugt größer 35 °C und besonders bevorzugt größer 50 °C.

Amorphe thermoplastische Polymere und teilkristalline thermoplastische Polymere kann man regelmäßig dadurch unterscheiden, dass erstere zwar eine Glasübergangstemperaturen Tg besitzen, jedoch keinen Schmelzpunkt Tm, während Letztere mit einem solchen Schmelzpunkt Tm ausgestattet sind. Glasübergangstemperaturen und Schmelzpunkte von amorphen bzw. teilkristallinen thermoplastischen Polymeren können mithilfe der Differentialkalomeritrie (DSC) ermittelt werden (s.o.). Dies ist dem Fachmann bekannt. Amorphe thermoplastische Polymere sind im Allgemeinen durch eine regellose, knäuelartige Anordnung der Makromoleküle sowohl in der Schmelze als auch im festen Zustand gekennzeichnet. Die Makromoleküle durchdringen sich vielfältig und bilden durch Verschlaufungen ein Netzwerk mit physikalischen, wiederlösbaren Vernetzungspunkten. Bei teilkristallinen thermoplastischen Polymeren lagern sich Teile der Polymerketten zu regelmäßigen, kristallinen Strukturen zusammen. Es entsteht ein ähnliches Netzwerk wie bei den amorphen Thermoplasten, jedoch mit zusätzlichen physikalischen, wiederlösbaren Verletzungspunkten, den Kristalliten. Zur Unterscheidung von amorphen und teilkristallinen Thermoplasten eignen sich regelmäßig auch sogenannte PVT-Diagramme. PVT-Diagramme beschreiben die Wechselwirkung zwischen Druck (P), spezifischem Volumen (V) und Temperatur (T). Hierbei können das Abkühlen einer Schmelze und die daraus resultierenden Zustandsänderungen von amorphen und teilkristallinen Polymeren durch das PVT-Diagramm dargestellt werden. Kennzeichnend für amorphe Polymere ist im PVT-Diagramm ein linearer Verlauf der Isobaren sowohl im Glaszustand als auch in der Schmelze. D.h. die Isobaren weisen sowohl im festen Zustand als auch im Schmelzezustand eine konstante Steigung auf. Der Schnittpunkt beider Geraden kann zur Bestimmung der Glasstemperatur T_{g} herangezogen werden. Während teilkristalline Thermoplaste in der Schmelze ein ähnliches Verhalten zeigen wie amorphe Polymere, wird der teilkristalline Zustand im PVT-Diagramm typischerweise durch einen parabelförmigen Verlauf der Isobaren charakterisiert. Der Übergang zwischen der Gerade und der Parabel kann dabei zur Bestimmung der Kristallisationstemperatur Tₖ herangezogen werden. Im Übrigen weiß der Fachmann amorphe und teilkristalline thermoplastische Polymersysteme auch anhand von Spannungs-Dehnungs-Diagrammen zu charakterisieren, d.h. über z.B. Zugversuche zur Ermittlung der Festigkeits- und Deformationseigenschaften.

In einer weiteren Ausführungsform kann vorgesehen sein, dass die mindestens zwei Schichten der zweiten Ausführungsvariante jeweils aus einem thermoplastischen Polymercompound gebildet sind oder diesen enthalten, enthaltend das mindestens eine erste thermoplastische Polymer, insbesondere identische erste thermoplastische Polymere, wobei die mindestens zwei Schichten sich in ihren Gesamtgehalten an Füllstoffen und Pigmenten unterscheiden.

Mit dem Gesamtgehalt an Füllstoffen und Pigmenten sollen im Sinne der vorliegenden Erfindung die Gewichtsanteilen aller infrage kommen Ausführungsformen erfasst sein, d.h. die eine Schicht der mindestens zwei Schichten kann Füllstoffe oder Pigmente oder Füllstoffe und Pigmente enthalten und die andere Schicht der mindestens zwei Schichten kann ebenfalls ausschließlich Füllstoffe oder ausschließlich Pigmente oder Füllstoffe und Pigmenten enthalten. In den jeweiligen beiden erstgenannten Alternativen geht die nicht in der Schicht vorliegende Komponente dann mit einem Gewichtsanteil von null in den Gesamtgehalt ein. Demgemäß impliziert der Begriff "Gesamtgehalt" im vorliegenden Fall nicht, dass stets Füllstoffe und Pigmente gleichzeitig vorzuliegen haben.

Ferner kann dabei vorgesehen sein, dass die Schicht der zweiten Ausführungsvariante enthaltend die rückseitige Fläche einen geringeren Gesamtgehalt an Füllstoffen und Pigmenten aufweist als die Schicht der zweiten Ausführungsvariante enthaltend die vorderseitige Fläche.

Auch kann vorgesehen sein, dass die Schicht der zweiten Ausführungsvariante enthaltend die rückseitige Fläche einen Gesamtgehalt an Füllstoffen und Pigmenten kleiner 50 Gew.-%, bevorzugt im Bereich von 0 bis 30 Gew.-% und besonders bevorzugt im Bereich von 5 bis 25 Gew.-%, jeweils bezogen auf das Gesamtgewicht der diese Füllstoffe und/oder Pigmente aufweisenden Schicht, aufweist und dass die Schicht der zweiten Ausführungsvariante enthaltend die vorderseitige Fläche einen Gesamtgehalt an Füllstoffen und Pigmenten größer 50 Gew.-%, bevorzugt im Bereich von 55 bis 90 Gew.-% und besonders bevorzugt im Bereich von 60 bis 85 Gew.-%, jeweils bezogen auf das Gesamtgewicht der diese Füllstoffe und/oder Pigmente aufweisenden Schicht, aufweist.

Sowohl bei der ersten wie auch bei der zweiten Ausführungsvariante der Erfindung weist das erste thermoplastische Polymer vorzugsweise eine Glasübergangstemperatur T_{g} von ≤ 0 °C, bevorzugt T_{g} von ≤ -10 °C und besonders bevorzugt T_{g} von ≤ -25 °C, jeweils bestimmt gemäß ISO 11357-2:1999-03 (Kunststoffe - Dynamische Differenzkalorimetrie (DDK) - Teil 2: Bestimmung der Glasübergangstemperatur), auf. Es hat sich überraschend gezeigt, dass bei Verwendung der vorangehend genannten ersten thermoplastischen Polymere die rückseitige Fläche des Beschichtungsstoffes über eine hinreichend klebrige Konsistenz verfügt, dass dieser unproblematisch auch auf sorptionsfähige Wand-, Boden-oder Deckenbeschichtungen aufgebracht werden kann. Mitunter ist dieser Beschichtungsstoff zwecks Erleichterung der Anbringung kurzzeitig auf eine Temperatur, die geringfügig über der Raumtemperatur liegt, zu erwärmen.

Es hat sich überraschend gezeigt, dass mit den erfindungsgemäßen flächigen Beschichtungsstoffen Glanzgrade der Kategorie "Matt" oder "Stumpfmatt" gemäß DIN EN 13300:2002 zugänglich sind. Bildet die vorderseitige Fläche des Beschichtungsstoffes die Sichtseite, kann auf diese Weise eine edle Anmutung erzielt werden.

Darüber hinaus gestattet es der erfindungsgemäße flächige Beschichtungsstoff für den Betrachter einen optischen Eindruck zu erzeugen, wie er sich üblicherweise mit der Verwendung von herkömmlichen Farbanstrichen wie Dispersionsfarben einstellt. Dies wird insbesondere dadurch erreicht, dass die Schicht der ersten Ausführungsvariante eine Pigment/Volumen-Konzentration im Bereich von 30 bis 90 %, bevorzugt im Bereich von 40 bis 85 % und besonders bevorzugt im Bereich von 50 bis 80 % aufweist. Bei der zweiten Ausführungsvariante wird dies dadurch erreicht, dass die Schicht enthaltend die vorderseitige Fläche eine Pigment/Volumen-Konzentration im Bereich von 30 bis 90 %, bevorzugt im Bereich von 40 bis 85 % und besonders bevorzugt im Bereich von 50 bis 80 % aufweist. Unter Pigment/Volumen-Konzentration soll im Sinne der vorliegenden Erfindung der Quotient aus - im Zähler - dem Gesamtgewicht gebildet aus den Gewichtsanteilen von Pigmenten und Füllstoffen und - im Nenner - dem Gesamtgewicht gebildet aus den Gewichtsanteilen von Pigmenten und Füllstoffe und den Gewichtsanteilen des/der Bindemittel verstanden werden, wobei zu den Bindemitteln im Sinne der vorliegenden Erfindung auch alle in dem Beschichtungsstoff vorliegenden thermoplastischen Polymere zu zählen sind.

Ein dreidimensionaler Flächeneindruck wird bei der ersten Ausführungsvariante der Erfindung auch dadurch erzeugt, dass man Fasern in die Schicht dieser ersten Ausführungsvariante einträgt. Dies gelingt bei der zweiten Ausführungsvariante, indem man Fasern in die Schicht, die die vorderseitige Fläche enthält, einträgt. Bevorzugt werden bei der zweiten Ausführungsvariante der Erfindung Fasern zusätzlich oder alternativ in diejenige Schicht eingetragen, die nicht die die vorderseitige Fläche enthaltende Schicht darstellt. Besonders bevorzugt liegen Fasern bei der zweiten Ausführungsvariante in der die rückseitige Fläche enthaltenden Schicht vor. Als besonders zweckmäßig hat es sich erwiesen, Fasern in denjenigen Schichten einzusetzen, die Füllstoff und gegebenenfalls Pigmente enthalten. Es hat sich überraschend gezeigt, dass bei Mitverwendung von Fasern in diesen Schichten eine besonders hohe Beladung mit Füllstoffen und gegebenenfalls Pigmenten gelingt. Auch auf diese Weise kann mit den erfindungsgemäßen Beschichtungsstoffen, wenn Fasern und Füllstoffe in derjenigen Schicht vorliegen, die die vorderseitige Fläche enthält, ein optischer Gesamteindruck erzielt werden, der dem eines Farbanstrichs entspricht. Wird für die Schichten, die nicht die vorderseitige Fläche enthalten, auf eine Kombination an Fasern und Füllstoffen zurückgegriffen, gelangt man regelmäßig zu sehr stabilen, mechanisch robusten Beschichtungen.

Demgemäß kann die Schicht der ersten Ausführungsvariante Fasern, Füllstoffe und/oder Pigmente enthalten. Auch kann demgemäß die mindestens eine Schicht der zweiten Ausführungsvariante, bevorzugt nicht die die vorderseitige Fläche enthaltende Schicht, besonders bevorzugt die die rückseitige Fläche enthaltende Schicht, Fasern, Füllstoffe und/oder Pigmente, insbesondere Fasern, enthalten.

Dabei kann vorgesehen sein, dass in der Füllstoffe und/oder Pigmente enthaltenden Schicht, insbesondere in der einen Schicht der ersten Ausführungsvariante, jeweils bezogen auf das Gesamtgewicht dieser Füllstoffe und/oder Pigmente enthaltenden Schicht, 20 bis 90 Gew.-%, bevorzugt 30 bis 80 Gew.-% und besonders bevorzugt 40 bis 70 Gew.% an Füllstoffen und/oder Pigmenten vorliegen

Für viele Anwendungen hat es sich als zweckmäßig erwiesen, dass in der Fasern enthaltenden Schicht, bezogen auf das Gesamtgewicht dieser die Fasern enthaltenden Schicht, 0,01 bis 30,0 Gew.%, bevorzugt 0,05 bis 27,5 Gew.% und besonders bevorzugt 0,5 bis 25,0 Gew.% an Fasern vorliegen. In den Schichten, die Fasern enthalten, insbesondere in den vorangehend genannten Mengen, können Füllstoffe in Mengen von 20 bis 90 Gew.-%, vorzugsweise im Bereich von 30 bis 80 Gew.-% und besonders bevorzugt 40 bis 70 Gew.-%, jeweils bezogen auf das Gesamtgewicht dieser die Fasern und Füllstoffe enthaltenden Schicht, vorliegen, wobei die Mengen der diese Schicht bildenden Komponenten sich stets zu 100,00 Gew.-% ergänzen.

Besonders robuste erfindungsgemäße flächige Beschichtungsstoffe werden auch dadurch erhalten, dass mindestens eine der Schichten der zweiten Ausführungsvariante, bevorzugt nicht die die vorderseitige Fläche enthaltende Schicht, eine Gewebe-, Gewirk-, Gestrick-, Vlies-, Netz- oder Folienlage, insbesondere Polymerfolienlage, umfasst oder hieraus besteht. Dabei ist besonders bevorzugt, wenn die die Gewebe-, Gewirk-, Gestrick-, Vlies-, Netz- oder Folienlage umfassende oder hieraus bestehende Schicht zwischen der die vorderseitige Fläche enthaltenden Schicht und der die rückseitige Fläche enthaltenden Schicht vorliegt.

In einer besonders zweckmäßigen Ausführungsform verfügt der erfindungsgemäße flächige Beschichtungsstoff zumindest abschnittsweise über Perforationen. Auf diese Weise kann man zu diffusionsoffenen Beschichtungssystemen gelangen. Dies ist insbesondere bei sorptionsfähigen Untergründen, wie sie regelmäßig bei Gebäudewänden, -decken und -böden anzutreffen sind, von Vorteil. Mit den erfindungsgemäßen flächigen Beschichtungsstoffen gelingt außerdem häufig ein effizienter Zugang zu insbesondere vorderseitigen Flächen, die mit einer dreidimensionalen Oberflächenstruktur ausgestattet sind. Hierbei kann es sich zum Beispiel um eine Netz- oder Gitterstruktur handeln. Diese Strukturen können zum Beispiel in die Oberfläche einer Schicht enthaltend thermoplastische Polymere eingeprägt werden. Dies ermöglicht ebenfalls den Zugang zu Strukturen, die dem visuell und haptisch wahrnehmbaren Oberflächenbild applizierter Wandfarben entsprechen.

Solche erfindungsgemäßen flächigen Beschichtungsstoffe der zweiten Ausführungsvariante der Erfindung sind demgemäß besonders bevorzugt, bei denen die Schicht enthaltend die vorderseitige Fläche aus mindestens einem zweiten thermoplastischen Polymer gebildet ist und wobei diese zudem eine Pigment/Volumen-Konzentration ≤ 95 % aufweist. Das mindestens eine zweite thermoplastische Polymer der Schicht enthaltend die vorderseitige Fläche verfügt dabei vorzugsweise über eine Glasübergangstemperatur T_{g} von ≥ 15 °C, bevorzugt ≥ 20 °C und besonders bevorzugt ≥ 30 °C, jeweils bestimmt gemäß ISO 11357-2:1999-03 (Kunststoffe - Dynamische Differenzkalorimetrie (DDK) - Teil 2: Bestimmung der Glasübergangstemperatur). Für viele Anwendungen haben sich solche Ausführungsformen als besonders praktikabel erwiesen, bei denen bei der zweiten Ausführungsvariante sowohl ein erstes thermoplastisches Polymer wie auch ein zweites thermoplastisches Polymer zum Einsatz kommen. In diesem Fall lassen sich die mindestens zwei Schichten der zweiten Ausführungsvariante zum Beispiel mittels Coextrusion zu erhalten.

Demgemäß ist es bei der zweiten Ausführungsvariante vielfach zweckmäßig, dass das erste thermoplastische Polymer über eine geringere Glasübergangstemperatur T_{g} verfügt als das zweite thermoplastische Polymer.

Grundsätzlich kann das erste thermoplastische Polymer ausgewählt werden aus der Gruppe bestehend aus thermoplastischen Elastomeren, insbesondere thermoplastische Polyolefinelastomeren wie Ethylen/Vinylacetat-Copolymere, thermoplastische Polyesterelastomere, thermoplastische Polyamidelastomere und/oder thermoplastische Silikonelastomere; dispersionsbasierten thermoplastischen Polymersystemen; Elastomeren; unvernetzten Kautschuken, wobei thermoplastische Elastomere bevorzugt sindDabei kann in einer besonders zweckmäßigen Ausgestaltung vorgesehen sein, dass das erste thermoplastische Polymer ausgewählt wird aus der Gruppe bestehend aus Polyolefin-Elastomeren (TPE-O), Styrol-basierten thermoplastischen Elastomeren (TPE-S), insbesondere Styrol-Butadien-Ethylen-Copolymeren, thermoplastischen Polyurethanen (TPU), Ethylen-Vinylacetat-Copolymeren, Polyether-Block-Amiden (PE-BA), thermoplastischen Elastomeren Polyisobuten (PIB), Polybuten (PB), Styrol/Butadien-Kautschuken, Acrylnitril-Butadien-Kautschuken, Naturkautschuken, Weich-PVC und beliebigen Mischungen hiervon.

Das zweite thermoplastische Polymer ist vorzugsweise ausgewählt aus der Gruppe bestehend aus Polyolefin-Elastomeren (TPE-O), Styrol-basierten thermoplastischen Elastomeren (TPE-S), insbesondere Styrol-Butadien-Ethylen-Copolymeren, thermoplastischen Polyurethanen (TPU), Ethylen-Vinylacetat-Copolymeren, Polyether-Block-Amiden (PE-BA), thermoplastischen Elastomeren Polyisobuten (PIB), Polybuten (PB), Styrol/Butadien-Kautschuken, Acrylnitril-Butadien-Kautschuken, Naturkautschuken, Weich-PVC,

thermoplastischen Polyolefinen, insbesondere LD-Polyethylen, HD-Polyethylen und/oder Polypropylen, Polyamiden, Polyestern, insbesondere Polyethylenterephthalat und/oder Polybutylenterephthalat, Polymethylmethacrylat, Polyaryletherketonen, Polyacrylnitril, Polyethylennaphthalaten, Polyethersulfonen, Polyimiden, Polyketonen, Polyphenylensulfiden, Polyphenylensulfonen, Polysulfonen, Styrol/Actylat-Copolymeren, Styrol-Acrylnitril-Copolymeren, Polyhydroxybutyrat, Polylactiden, Polyetherimiden, Polyoxymethylen, Polycarbonaten, Polystyrol, schlagzähmodifiziertem Polystyrol, Styrol-basierten (Co)-Polymeren, insbesondere ABS, SAN, PS, HIPS und/oder ASA, thermoplastischer Stärke, Polyvinylalkohol (PVA) und beliebigen Mischungen hiervon.

Besonders bevorzugt wird für das zweite thermoplastische Polymer zurückgegriffen auf solche, ausgewählt aus der Gruppe bestehend thermoplastischen Polyolefinen, insbesondere LD-Polyethylen, HD-Polyethylen und/oder Polypropylen, Polyamiden, Polyestern, insbesondere Polyethylenterephthalat und/oder Polybutylenterephthalat, Polylactiden, Polyoxymethylen, thermoplastischer Stärke, Polyvinylalkohol (PVA) und beliebigen Mischungen hiervon.

Grundsätzlich kommen für das erste und/oder zweite thermoplastische Polymer, insbesondere für das zweite thermoplastische Polymer, Polymere und Copolymere in Betracht auswählt aus der Gruppe bestehend aus Polyolefinen, insbesondere Polyethylen, z.B. HD-PE, und/oder Polypropylen oder Propylencopolymere, Polyamiden, Polyestern, insbesondere thermoplastischen Polyestern wie Polyethylenterephthalat und/oder Polybutylenterephthalat, Polymethylmethacrylat, Polyaryletherketonen, Polyacrylnitril, Polyethylennaphthalaten, Polyethersulfonen, Polyimiden, Polyketonen, Polyphenylensulfiden, Polyphenylensulfonen, Polysulfonen, Styrol/Acrylat-Copolymeren, Styrol-Butadien-Kautschuken, Styrol-Butadien-Ethylen-Copolymeren, Acrylnitril-Butadien-Kautschuken, Styrol-Acrylnitril-Copolymere, Acrylnitril-Butadien-Styrol-Copolymere, Naturkautschuken, Ethylen-Vinylacetat-Copolymeren, Polyhydroxybutyrat, Polylactiden, Polyetherimiden, Polyoxymethylen, Polycarbonaten, Polystyrol, schlagzähmodifiziertem Polystyrol, Styrol-basiertem (Co)-Polymeren wie ABS, SAN, PS, HIPS und/oder ASA, Polyether-Block-Amiden (PE-BA), Polyvinylchlorid (PVC), Polyurethanen, z.B. thermoplastischen Polyurethanen, thermoplastischer Stärke, thermoplastischen Elastomeren und beliebigen Mischungen hiervon.

Das erste und/oder zweite thermoplastische Polymer können dabei ausgewählt sein aus der Gruppe bestehend aus Styrol/Acrylat-Copolymeren, Ethylen/Vinylacetat-Copolymeren, Styrol-Butatien-Ethylen-Copolymeren, thermoplastischen Elastomeren, thermoplastischen Polyurethanen, thermoplastischen Polyestern, thermoplastischen Polyamiden und deren beliebigen Mischungen. Unter den dabei zum Einsatz kommenden thermoplastischen Elastomeren sind thermoplastische Elastomere auf Olefinbasis wie LLDPE, EOC, PP/EPDM und/oder EVA, vernetzte thermoplastische Elastomere auf Olefinbasis (TPV), thermoplastische Copolyesterelastomere, thermoplastische Polyamidelastomere, thermoplastische Elastomere auf Basis von vernetztem Kautschuk, thermoplastische Silikonelastomere wie Polysiloxan-Copolymere, Styrol-basierte thermoplastische Elastomere, insbesondere thermoplastische Styrol-Blockcopolymere wie SBS, SEBS, SEPS, SEEPS und/oder MBS, Polyethylen/Polyester-basierte thermoplastische Elastomere und Urethanbasierte thermoplastische Elastomere besonders geeignet. Auch können Mischungen dieser thermoplastischen Elastomere verwendet werden.

Für das erste thermoplastische Polymer wird geeigneter Weise auf thermoplastische Polymere, insbesondere thermoplastische Elastomere, zurückgegriffen. Alternativ können hierfür auch besonders zweckmäßig Polyacrylate, insbesondere Polyacrylate mit einer Glasübergangstemperatur T_{g} von ≤ -10 °C und bevorzugt T_{g} von ≤ -25 °C, jeweils bestimmt gemäß ISO 11357-2:1999-03 (Kunststoffe - Dynamische Differenzkalorimetrie (DDK) - Teil 2: Bestimmung der Glasübergangstemperatur) eingesetzt werden. Ferner können hierfür alternativ ebenfalls Ethylen-Vinylacetat-Copolymere mit einem Vinylacetatanteil im Bereich von 40 bis 90 mol-%, bevorzugt im Bereich von 70 bis 85 mol-%, eingesetzt werden. Alternativ oder zusätzlich greift man für das zweite thermoplastische Polymer der zweiten Ausführungsvariante bevorzugt auf aufschmelzbare thermoplastische Polymere zurück.

Für den Polymercompound der zweiten Ausführungsvariante, enthaltend mindestens ein erstes thermoplastisches Polymer sowie Füllstoffe und/oder Pigmente, können alle gängigen Füllstoffe und Pigmente zur Anwendung gelangen.

Exemplarisch seien als geeignete Füllstoffe solche ausgewählt aus der Gruppe bestehend aus silikatischen Füllstoffen, calcitischen Füllstoffen, Bariumsulfat und deren beliebige Mischungen genannt. Bevorzugt unter den silikatischen Füllstoffen sind Quarzite, Schichtsilikate, Talk, Glimmer, Kaolin, Feldspate, Vutkanite und Kieselerden, wie Kieselgur und Diatomeenerden. Selbst verständlich können auch beliebige Mischungen an silikatischen Füllstoffen eingesetzt werden. Unter den calcitischen Füllstoffen wird bevorzugt auf Calciumcarbonate, Dolomite, Calcite, Aragonite und deren beliebige Mischungen zurückgegriffen. Selbstverständlich sind auch Mischungen aus silikatischen und calcitischen Füllstoffen möglich.

Geeignete Pigmente können ausgewählt sein aus der Gruppe bestehend aus Metalloxiden, insbesondere Eisenoxid, Chromoxid oder Titandioxid, Ruß, insbesondere Farbruß, Metallchromaten, insbesondere Bleichromat-gelb, Molybdatorange, Komplexen anorganischer Buntpigmente, insbesondere Chromtitangelb, Chromeisenbraun, Kobaltblau, Nickeltitangelb, Zinkeisenbraun oder Wismutvanadatgelb, Sulfiden, insbesondere Cadmiumsulfid, Cersulfid, Ultramarin oder Zinksulfid, Azopigmenten, insbesondere verlackte Azopigmente, Disazopigmenten, Diazokondensationspigmenten, Benzimidazolpigmenten, Metallkomplexpigmenten, Isoindolinpigmenten, Isoindolinonpigmenten, und polyzyklischen Pigmenten, insbesondere Chinacridon, Chinophthalon, Diketo-Pyrrolo-Pyrrol, Disoxazinpigmenten, Indanthron, Perylen oder Phthalocyanin und deren beliebige Mischungen.

Alternativ kann für die Schicht der zweiten Ausführungsvariante enthaltend die vorderseitige Fläche auch auf eine Farbschicht zurückgegriffen werden, insbesondere erhalten aus einem dispersionsgebundenen Beschichtungsstoff.

Die erfindungsgemäßen flächigen Beschichtungsstoffe können regelmäßig in sehr dünner Form erhalten und eingesetzt werden. Für viele Anwendungen hat es sich als zweckmäßig erwiesen, für die Schicht der ersten Ausführungsvariante eine durchschnittliche Dicke im Bereich von 50 bis 300 µm, bevorzugt im Bereich von 75 bis 200 µm und besonders bevorzugt im Bereich von 100 bis 150 µm vorzusehen. Für die Schicht der zweiten Ausführungsvariante enthaltend die rückseitige Fläche wird bevorzugt auf eine durchschnittliche Dicke im Bereich von 50 bis 300 µm, bevorzugt im Bereich von 75 bis 200 µm und besonders bevorzugt im Bereich von 100 bis 150 µm zurückgegriffen. Aufgrund der relativ geringen Dicke der erfindungsgemäßen flächigen Beschichtungsstoffe können diese auch als aufgerollte Bahnware zur Verfügung gestellt werden. Zudem ermöglichen die erfindungsgemäßen flächigen Beschichtungsstoffe, daraus Flächengebilde zuzuschneiden, die erst in dem zugeschnittenen Zustand an eine Oberfläche angebracht werden. Auf diese Weise gelingt es besonders effizient und sauber, auch komplizierte Flächenmuster auf Wänden, Decken oder Böden zu erhalten. Insbesondere bei der Gestaltung solcher Flächenmuster sind benachbarte Flächengebilde in der Weise zu verlegen, dass die Kantenverläufe aneinander zur Anlage gelangen. Hierbei gestatten es die erfindungsgemäßen flächigen Beschichtungsstoffe, dass überlappende Kantenverläufe nicht optisch negativ in Erscheinung treten. So kann durch leichtes Erwärmen der in bzw. mit den flächigen Beschichtungsstoffen verwendeten thermoplastischen Polymeren ein überlappendes Areal in einer Weise bearbeitet werden, dass ein einheitlicher Flächeneindruck ohne störende Erhebungen im Überlappungsbereich entsteht. Ein besonders sauberer und nach Verlegung benachbarter erfindungsgemäßer flächiger Beschichtungsstoffe nicht mehr wahrnehmbarer Übergang im Bereich aneinander anstoßender Beschichtungsstoffe kann auch dadurch besonders zuverlässig erhalten werden, dass der Kantenverlauf mindestens abschnittsweise eine Kante aufweist, die einen stumpfen Winkel mit der Vorderseite oder der Rückseite bildet. Ein benachbarter Kantenverlauf mit einem hierzu korrespondierenden Winkel kann dabei besonders effizient zu einem sehr sauberen und einheitlichen Flächenbild beitragen. Des Weiteren gelingt mit derartigen flächigen Beschichtungsstoffen eine besonders ansprechende Verlegung benachbarter Beschichtungsstoffbahnen, bei denen die Beschichtungsstoffe entlang ihrer Kantenverläufe mindestens abschnittsweise einen Randbereich aufweisen mit einem sich zum Kantenverlauf hin verringernden Abstand zwischen Vorderseite und Rückseite.

Die der Erfindung zugrunde liegende Aufgabe wird des Weiteren gelöst durch ein Verfahren zur Beschichtung einer Decke, eines Bodens oder einer Wand, umfassend die Schritte i) Zurverfügungstellung eines erfindungsgemäßen, insbesondere zugeschnittenen, flächigen Beschichtungsstoffs, und ii) Anbringen des, insbesondere zugeschnittenen, flächigen Beschichtungsstoffs mit seiner Rückseite an eine Decke, auf einen Boden oder an eine Wand.

Mit der vorliegenden Erfindung geht die überraschende Erkenntnis einher, dass sich die erfindungsgemäßen flächigen Beschichtungsstoffe auch von Laien zuverlässig und sauber, insbesondere zu Dekorationszwecken, an Wänden, Decken und/oder Bodenbelägen, insbesondere in Innenräumen, anbringen lassen. Hierfür kann allein die Haftwirkung der rückseitigen Fläche verwendet werden. Die erfindungsgemäßen flächigen Beschichtungsstoffe können dabei ohne weiteres als diffusionsfähige Beschichtungssysteme ausgestaltet werden. Von besonderem Vorteil ist auch, dass mit den erfindungsgemäßen flächigen Beschichtungsstoffen Oberflächen erhalten werden können, die sich durch Glanzgrade der Kategorie "Matt" und "Stumpfmatt" gemäß DIN EN 13300:2002 auszeichnen. Für viele Anwendungen hat es sich als besonders zweckmäßig erwiesen, dass Überlappungen zwischen benachbart verlegten flächigen Beschichtungsstoffen visuell nicht erkennbar und dass auch komplexe Dekormuster darstellbar sind. Als besonders vorteilhaft hat sich auch herausgestellt, dass Gegenstände in unmittelbarer Nachbarschaft der zu beschichtenden Wände, Decken oder Böden nicht mehr abzudecken sind. Mit den erfindungsgemäßen flächigen Beschichtungsstoffen gelingt anders als bei Anstrichfarben ein völlig spritzfreier Auftrag.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Flächiger Beschichtungsstoff mit einer vorderseitigen Fläche, welche insbesondere die Sichtseite bildet, und einer gegenüberliegenden rückseitigen Fläche sowie einem Kantenverlauf, umfassend oder bestehend aus
- einer Schicht, enthaltend oder gebildet aus einem thermoplastischen Polymercompound, enthaltend mindestens ein erstes thermoplastisches Polymer sowie Füllstoffe und/oder Pigmente und gegebenenfalls Additive, wobei das erste thermoplastische Polymer eine Glasübergangstemperatur T_{g} von ≤ 10 °C, bestimmt gemäß ISO 11357-2:1999-03 (Kunststoffe - Dynamische Differenzkalorimetrie (DDK) - Teil 2: Bestimmung der Glasübergangstemperatur), aufweist, wobei das erste thermoplastische Polymer eine überwiegend amorphe Morphologie aufweist und wobei die Schicht eine Pigment/Volumen-Konzentration ≤ 95 % besitzt (erste Ausführungsvariante), oder
- mindestens zwei Schichten, wobei die Schicht enthaltend die rückseitige Fläche enthält oder gebildet ist aus einem thermoplastischen Polymercompound, enthaltend mindestens ein erstes thermoplastisches Polymer sowie Füllstoffe und/oder Pigmente und gegebenenfalls Additive, wobei das mindestens eine erste thermoplastische Polymer eine Glasübergangstemperatur T_{g} von ≤ 10 °C, bestimmt gemäß ISO 11357-2:1999-03 (Kunststoffe - Dynamische Differenzkalorimetrie (DDK) - Teil 2: Bestimmung der Glasübergangstemperatur), aufweist und wobei das erste thermoplastische Polymer eine überwiegend amorphe Morphologie aufweist (zweite Ausführungsvariante).

2. Flächiger Beschichtungsstoff nach Anspruch 1, **dadurch gekennzeichnet, dass** das erste thermoplastische Polymer eine Glasübergangstemperatur T_{g} von ≤ o °C, bevorzugt T_{g} von ≤ -10 °C und besonders bevorzugt T_{g} von ≤ -25 °C, jeweils bestimmt gemäß ISO 11357-2:1999-03 (Kunststoffe - Dynamische Differenzkalorimetrie (DDK) - Teil 2: Bestimmung der Glasübergangstemperatur), aufweist.

3. Flächiger Beschichtungsstoff nach Anspruch 1 oder 2, **dadurch gekennzeichnet, dass** mindestens die vorderseitige Fläche, bevorzugt die die Sichtseite bildende Fläche, einen Glanz der Kategorie "Matt" oder "Stumpfmatt" gemäß DIN EN 13300:2002 aufweist.

4. Flächiger Beschichtungsstoff nach einem der vorhergehenden Ansprüche, **dadurch gekennzeichnet, dass**
die Schicht der ersten Ausführungsvariante eine Pigment/Volumen-Konzentration im Bereich von 30 bis 90 %, bevorzugt im Bereich von 40 bis 85 % und besonders bevorzugt im Bereich von 50 bis 80 % aufweist oder dass
die Schicht der zweiten Ausführungsvariante enthaltend die vorderseitige Fläche eine Pigment/Volumen-Konzentration im Bereich von 30 bis 90 %, bevorzugt im Bereich von 40 bis 85 % und besonders bevorzugt im Bereich von 50 bis 80 % aufweist.

5. Flächiger Beschichtungsstoff nach einem der vorhergehenden Ansprüche, **dadurch gekennzeichnet, dass**
die Schicht der ersten Ausführungsvariante Fasern, Füllstoffe und/oder Pigmente enthält oder dass
mindestens eine Schicht der zweiten Ausführungsvariante, bevorzugt nicht die die vorderseitige Fläche enthaltende Schicht, besonders bevorzugt die die rückseitige Fläche enthaltende Schicht, Fasern, Füllstoffe und/oder Pigmente, insbesondere Fasern, enthält.

6. Flächiger Beschichtungsstoff nach Anspruch 5, **dadurch gekennzeichnet, dass** in der Fasern enthaltenden Schicht, bezogen auf das Gesamtgewichtdieser Schicht, 0,1 bis 30,0 Gew.%, bevorzugt 0,5 bis 27,5 Gew.% und besonders bevorzugt 5 bis 25,0 Gew.% an Fasern vorliegen.

7. Flächiger Beschichtungsstoff nach einem der vorhergehenden Ansprüche, **dadurch gekennzeichnet, dass**
in der Füllstoffe und/oder Pigmente enthaltenden Schicht, insbesondere in der einen Schicht der ersten Ausführungsvariante, jeweils bezogen auf das Gesamtgewichtdieser Schicht, 20 bis 90 Gew.-%, bevorzugt 30 bis 80 Gew.-% und besonders bevorzugt 40 bis 70 Gew.% an Füllstoffen und/oder Pigmenten vorliegen.

8. Flächiger Beschichtungsstoff nach einem der vorhergehenden Ansprüche, **dadurch gekennzeichnet, dass**
mindestens eine der Schichten der zweiten Ausführungsvariante, bevorzugt nicht die die vorderseitige Fläche enthaltende Schicht, eine Gewebe-, Gewirk-, Gestrick-, Vlies-, Netz- oder Folienlage, insbesondere Polymerfolienlage, umfasst oder hieraus besteht und dass vorzugsweise die die Gewebe-, Gewirk-, Gestrick-, Vlies-, Netz- oder Folienlage umfassende oder hieraus bestehende Schicht zwischen der die vorderseitige Fläche enthaltenden Schicht und der die rückseitige Fläche enthaltenden Schicht vorliegt.

9. Flächiger Beschichtungsstoff nach einem der vorhergehenden Ansprüche, **dadurch gekennzeichnet, dass**
dieser zumindest abschnittsweise Perforationen und/oder, insbesondere auf der vorderseitigen Fläche, eine dreidimensionale Oberflächenstruktur, bevorzugt eine Netz- oder Gitterstruktur, besonders bevorzugt eine Struktur, die dem visuell und haptisch wahrnehmbaren Oberflächenbild applizierter Wandfarben entspricht, aufweist.

10. Flächiger Beschichtungsstoff nach einem der vorhergehenden Ansprüche, **dadurch gekennzeichnet, dass**
die Schicht der zweiten Ausführungsvariante enthaltend die vorderseitige Fläche enthält oder gebildet ist aus mindestens einem zweiten thermoplastischen Polymer und eine Pigment/Volumen-Konzentration ≤ 95 % besitzt oder dass die Schicht der zweiten Ausführungsvariante enthaltend die vorderseitige Fläche eine Farbschicht, insbesondere erhalten aus einem dispersionsgebundenen Beschichtungsstoff, darstellt oder umfasst.

11. Flächiger Beschichtungsstoff nach einem der vorhergehenden Ansprüche, **dadurch gekennzeichnet, dass**
der Kantenverlauf mindestens abschnittsweise eine Kante aufweist, die einen stumpfen Winkel mit der Vorderseite oder der Rückseite bildet und/oder dass dieser entlang des Kantenverlaufs mindestens abschnittsweise einen Randbereich aufweist mit einem sich zum Kantenverlauf hin verringernden Abstand zwischen Vorderseite und Rückseite.

12. Flächiger Beschichtungsstoff nach einem der vorhergehenden Ansprüche, **dadurch gekennzeichnet, dass**
die mindestens zwei Schichten der zweiten Ausführungsvariante sich in ihrer chemischen Zusammensetzung und/oder ihren physikalischen Eigenschaften unterscheiden
oder dass die mindestens zwei Schichten der zweiten Ausführungsvariante jeweils aus einem thermoplastischen Polymercompound gebildet sind oder diesen enthalten, enthaltend das mindestens eine erste thermoplastische Polymer, insbesondere identische erste thermoplastische Polymere, wobei die mindestens zwei Schichten sich in ihren Gesamtgehalten an Füllstoffen und Pigmenten unterscheiden.

13. Flächiger Beschichtungsstoff nach einem der vorhergehenden Ansprüche, **dadurch gekennzeichnet, dass**
die Schicht der zweiten Ausführungsvariante enthaltend die rückseitige Fläche einen geringeren Gesamtgehalt an Füllstoffen und Pigmenten aufweist als die Schicht der zweiten Ausführungsvariante enthaltend die vorderseitige Fläche.

14. Flächiger Beschichtungsstoff nach Anspruch 13, **dadurch gekennzeichnet, dass** die Schicht der zweiten Ausführungsvariante enthaltend die rückseitige Fläche einen Gesamtgehalt an Füllstoffen und Pigmenten kleiner 50 Gew.-%, bevorzugt im Bereich von o bis 30 Gew.-% und besonders bevorzugt im Bereich von 5 bis 25 Gew.-%, jeweils bezogen auf das Gesamtgewicht dieser Schicht, aufweist und dass die Schicht der zweiten Ausführungsvariante enthaltend die vorderseitige Fläche einen Gesamtgehalt an Füllstoffen und Pigmenten größer 50 Gew.-%, bevorzugt im Bereich von 55 bis 90 Gew.-% und besonders bevorzugt im Bereich von 60 bis 85 Gew.-%, jeweils bezogen auf das Gesamtgewicht dieser Schicht, aufweist.

15. Flächiger Beschichtungsstoff nach einem der vorhergehenden Ansprüche, **dadurch gekennzeichnet, dass**
die Schicht der ersten Ausführungsvariante eine durchschnittliche Dicke im Bereich von 50 bis 300 µm, bevorzugt im Bereich von 75 bis 200 µm und besonders bevorzugt im Bereich von 100 bis 150 µm aufweist oder dass
die Schicht der zweiten Ausführungsvariante enthaltend die rückseitige Fläche eine durchschnittliche Dicke im Bereich von 50 bis 300 µm, bevorzugt im Bereich von 75 bis 200 µm und besonders bevorzugt im Bereich von 100 bis 150 µm aufweist.

16. Flächiger Beschichtungsstoff nach einem der vorhergehenden Ansprüche, **dadurch gekennzeichnet, dass**
bei der zweiten Ausführungsvariante das erste thermoplastische Polymer geringere Glasübergangstemperatur T_{g} aufweist als das zweite thermoplastische Polymer.

17. Flächiger Beschichtungsstoff nach einem der Ansprüche 10 bis 16, **dadurch gekennzeichnet, dass**
das mindestens eine zweite thermoplastische Polymer der Schicht enthaltend die vorderseitige Fläche eine Glasübergangstemperatur T_{g} von ≥ 15 °C, bevorzugt ≥ 20 °C und besonders bevorzugt ≥ 30 °C aufweist, jeweils bestimmt gemäß ISO 11357-2:1999-03 (Kunststoffe - Dynamische Differenzkalorimetrie (DDK) - Teil 2: Bestimmung der Glasübergangstemperatur).

18. Flächiger Beschichtungsstoff nach einem der vorhergehenden Ansprüche, **dadurch gekennzeichnet, dass**
das erste thermoplastische Polymer ausgewählt ist aus der Gruppe bestehend aus thermoplastischen Elastomeren, insbesondere thermoplastische Polyolefinelastomeren wie Ethylen/Vinylacetat-Copolymere, thermoplastische Polyesterelastomere, thermoplastische Polyamidelastomere und/oder thermoplastische Silikonelastomere; dispersionsbasierten thermoplastischen Polymersystemen; Elastomeren; unvernetzten Kautschuken, wobei thermoplastische Elastomere bevorzugt sind.

19. Flächiger Beschichtungsstoff nach einem der vorhergehenden Ansprüche, **dadurch gekennzeichnet, dass**
das erste thermoplastische Polymer ausgewählt ist aus der Gruppe bestehend aus Polyolefin-Elastomeren (TPE-O), Styrol-basierten thermoplastischen Elastomeren (TPE-S), insbesondere Styrol-Butadien-Ethylen-Copolymeren, thermoplastischen Polyurethanen (TPU), Ethylen-Vinylacetat-Copolymeren, Polyether-Block-Amiden (PE-BA), thermoplastischen Elastomeren Polyisobuten (PIB), Polybuten (PB), Styrol/Butadien-Kautschuken, Acrylnitril-Butadien-Kautschuken, Naturkautschuken, Weich-PVC und beliebigen Mischungen hiervon.

20. Flächiger Beschichtungsstoff nach einem der vorhergehenden Ansprüche, **dadurch gekennzeichnet, dass**
das zweite thermoplastische Polymer ausgewählt ist aus der Gruppe bestehend aus Polyolefin-Elastomeren (TPE-O), Styrol-basierten thermoplastischen Elastomeren (TPE-S), insbesondere Styrol-Butadien-Ethylen-Copolymeren, thermoplastischen Polyurethanen (TPU), Ethylen-Vinylacetat-Copolymeren, Polyether-Block-Amiden (PE-BA), thermoplastischen Elastomeren Polyisobuten (PIB), Polybuten (PB), Styrol/Butadien-Kautschuken, Acrylnitril-Butadien-Kautschuken, Naturkautschuken, Weich -PVC,
thermoplastischen Polyolefinen, insbesondere LD-Polyethylen, HD-Polyethylen und/oder Polypropylen, Polyamiden, Polyestern, insbesondere Polyethylenterephthalat und/oder Polybutylenterephthalat, Polymethylmethacrylat, Polyaryletherketonen, Polyacrylnitril, Polyethylennaphthalaten, Polyethersulfonen, Polyimiden, Polyketonen, Polyphenylensulfiden, Polyphenylensulfonen, Polysulfonen, Styrol/Acrylat-Copolymeren, Styrol-Acrylnitril-Copolymeren, Polyhydroxybutyrat, Polylactiden, Polyetherimiden, Polyoxymethylen, Polycarbonaten, Polystyrol, schlagzähmodifiziertem Polystyrol, Styrol-basierten (Co)-Polymeren, insbesondere ABS, SAN, PS, HIPS und/oder ASA, thermoplastischer Stärke, Polyvinylalkohol (PVA) und beliebigen Mischungen hiervon, und
insbesondere ausgewählt aus der Gruppe bestehend aus thermoplastischen Polyolefinen, insbesondere LD-Polyethylen, HD-Polyethylen und/oder Polypropylen, Polyamiden, Polyestern, insbesondere Polyethylenterephthalat und/oder Polybutylenterephthalat, Polylactiden, Polyoxymethylen, thermoplastischer Stärke, Polyvinylalkohol (PVA) und beliebigen Mischungen hiervon.

21. Flächiger Beschichtungsstoff nach einem der vorhergehenden Ansprüche, **dadurch gekennzeichnet, dass**
das erste thermoplastische Polymer ein thermoplastisches Polymer, insbesondere ein thermoplastisches Elastomer, oder ein Polyacrylat, insbesondere ein Polyacrylat mit einer Glasübergangstemperatur T_{g} von ≤ -10 °C und bevorzugt T_{g} von ≤ -25 °C, jeweils bestimmt gemäß ISO 11357-2:1999-03 (Kunststoffe - Dynamische Differenzkalorimetrie (DDK) - Teil 2: Bestimmung der Glasübergangstemperatur), oder ein Ethylen-Vinylacetat-Copolymer mit einem Vinylacetatanteil im Bereich von 40 bis 90 mol-%, bevorzugt im Bereich von 70 bis 85 mol-%, darstellt oder umfasst und/oder dass
das zweite thermoplastische Polymer ein aufschmelzbares thermoplastisches Polymer darstellt oder umfasst.

22. Flächiger Beschichtungsstoff nach einem der vorhergehenden Ansprüche, **dadurch gekennzeichnet, dass**
das erste thermoplastische Polymer mit überwiegend amorpher Morphologie Anteile mit teilkristalliner Morphologie aufweist, die nicht oberhalb von 40 Gew.-%, bevorzugt nicht oberhalb von 35 Gew.-%, bezogen auf das Gesamtgewicht des ersten thermoplastischen Polymers, liegen.

23. Flächiger Beschichtungsstoff nach Anspruch 22, **dadurch gekennzeichnet, dass** die Anteile mit teilkristalliner Morphologie einen Schmelzpunkt Tm, ermittelt gemäß DIN EN ISO 11357-3:2018-07 (Kunststoffe - Dynamische Differenz-Thermoanalyse (DSC) - Teil 3: Bestimmung der Schmelz- und Kristallisationstemperatur und der Schmelz- und Kristallisationsenthalpie (ISO 11357-3:2018), größer 25 °C, bevorzugt größer 35 °C und besonders bevorzugt größer 50 °C aufweisen.

24. Verfahren zur Beschichtung einer Decke, eines Bodens oder einer Wand, umfassend die Schritte
Zurverfügungstellung eines, insbesondere zugeschnittenen, flächigen Beschichtungsstoffs gemäß einem der vorangehenden Ansprüche, und
Anbringen des, insbesondere zugeschnittenen, flächigen Beschichtungsstoffs mit seiner Rückseite an eine Decke, auf einen Boden oder an eine Wand.

25. Verwendung des flächigen Beschichtungsstoffs gemäß einem der Ansprüche 1 bis 23 für die Dekoration von Wänden, Decken und/oder Bodenbelägen, insbesondere in Innenräumen.
